(19) Europäisches Patentamt
European Patent Office
Office européen des brevets

(11) Veröffentlichungsnummer : **0 213 485 B1**

(12) # EUROPÄISCHE PATENTSCHRIFT

(45) Veröffentlichungstag der Patentschrift : **09.08.89**

(51) Int. Cl.$^4$ : **C 07 C147/12**

(21) Anmeldenummer : **86111181.3**

(22) Anmeldetag : **12.08.86**

(54) **Verfahren zur Herstellung von Arylamino-nitro-phenyl-oxethylsulfonen.**

(30) Priorität : **24.08.85 DE 3530338**

(43) Veröffentlichungstag der Anmeldung : **11.03.87 Patentblatt 87/11**

(45) Bekanntmachung des Hinweises auf die Patenterteilung : **09.08.89 Patentblatt 89/32**

(84) Benannte Vertragsstaaten : **CH DE FR GB IT LI**

(56) Entgegenhaltungen :
**EP-A- 0 171 611**
**DE-C- 1 179 317**
**GB-A- 924 990**
**US-A- 3 414 579**
**Chemical Abstracts, bd. 60, nr. 9, 27. April 1964; Columbus, Ohio, USA. IMPERIAL CHEMICAL INDUSTRIES "Water-sol. reactive dyes", Spalte 10 844 d**

(73) Patentinhaber : **HOECHST AKTIENGESELLSCHAFT**
**Postfach 80 03 20**
**D-6230 Frankfurt am Main 80 (DE)**

(72) Erfinder : **Brodt, Werner, Dr.**
**Drosselbartweg 43**
**D-6234 Hattersheim am Main (DE)**
Erfinder : **Papenfuhs, Theodor, Dr.**
**Heinrich-Bleicher-Strasse 40**
**D-6000 Frankfurt am Main 50 (DE)**

EP 0 213 485 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Gegenstand der Erfindung ist ein Verfahren zur Herstellung von Arylamino-nitro-phenyloxethylsulfonen der allgemeinen Formel (1)

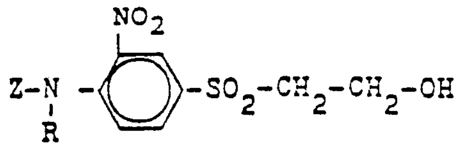

(1)

in welcher Z den Rest

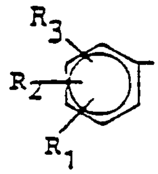

($z_a$)

oder

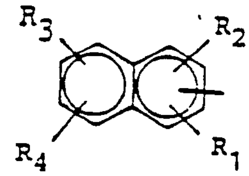

($z_b$)

bedeutet, wobei R ein Wasserstoffatom oder eine $Alkyl_{C1\text{-}C4}$ gruppe darstellt, $R_1$ eine —NR—R-Gruppe bedeutet, $R_2$ ein Wasserstoffatom, eine $Alkyl_{C1\text{-}C4}$ gruppe, beispielsweise die Methyl- oder Ethylgruppe, oder eine $Alkoxy_{C1\text{-}C4}$ gruppe, beispielsweise die Methoxy- oder Ethoxygruppe, bedeutet, $R_3$ ein Wasserstoff, Chlor- oder Bromatom oder eine Sulfonsäure-, Sulfonsäureamid-, Carbonsäure-, Carbonsäureamid-, Hydroxy-, Carbomethoxy-, Carbethoxy- oder β-Hydroxyethylsulfongruppe, darstellt, $R_4$ ein Wasserstoff-, Chlor- oder Bromatom oder eine Sulfonsäure-, Carbonsäure-, Hydroxy- oder $Alkoxy_{C1\text{-}C4}$ gruppe, beispielsweise die Methoxy- oder Ethoxygruppe, oder eine $Alkyl_{C1\text{-}C4}$ gruppe, beispielsweise die Methyl- oder Ethylgruppe, bedeutet, wobei im Rest $Z_a$ 1-3 verschiedene jedoch höchstens zwei gleiche Substituenten von $R_1$-$R_3$, im Rest $Z_b$ 1-4 verschiedene, jedoch höchstens zwei gleiche Substituenten von $R_1$-$R_4$ enthalten sein können, und R die weiter oben genannte Bedeutung hat, indem man Verbindungen der allgemeinen Formel (2)

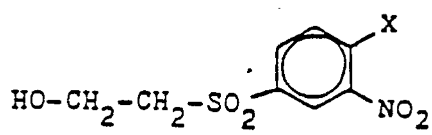

(2)

in welcher X ein Chlor- oder Bromatom bedeutet, mit einer Diaminoverbindung der allgemeinen Formel

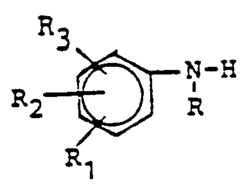

(3a)

oder

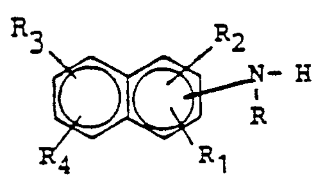

(3b)

in welchen R, $R_1$, $R_2$, $R_3$ und $R_4$ die vorstehend genannten Bedeutungen haben, bei Temperaturen von 20 bis 180 °C, vorzugsweise 40 bis 100 °C, vorzugsweise in Wasser bei pH-Werten von 4,0 bis 10,0, vorzugsweise von 5,5 bis 8,5 oder in geeigneten organischen Lösungsmitteln oder Gemischen aus solchen Lösungsmitteln in Gegenwart eines anorganischen oder organischen Säurebindemittels umsetzt.

Geeignete organische Lösungsmittel, die als Reaktionsmedium dienen können, sind beispielsweise niedere Alkanole, wie z. B. Methanol oder iso-Propanol, aromatische Kohlenwasserstoffe, wie z. B. Xylole, aromatische Chlorkohlenwasserstoffe, wie z. B. Chlorbenzol, ferner Dimethylformamid oder N-Methylpyrrolidon.

Ist die eingesetzte Diaminoverbindung der Formel (3a) oder (3b) bei der angewandten Reaktionstemperatur flüssig, so kann die Umsetzung auch in einem Überschuß an Diaminoverbindung als Reaktionsmedium durchgeführt werden.

Der Zusatz eines Säurebindemittels ist zur Bindung des bei der Reaktion freiwerdenden Chlorwasserstoffs bzw. Bromwasserstoffs erforderlich. Hierfür kommen sowohl anorganische basische Verbindungen, wie beispielsweise Natriumhydroxid, Kaliumhydroxid, Natriumcarbonat, Natriumhydrogencarbonat, Kaliumcarbonat, Kaliumacetat, Magnesiumoxid oder Magnesiumhydroxidcarbonat, als auch organische basische Verbindungen, wie beispielsweise Trialkyl$_{C1-C4}$ amine, wie z. B. Triethylamin, Pyridin, Chinolin, Picoline oder Morpholin in Betracht. Auch eine im Überschuß eingesetzte Aminoverbindung der allgemeinen Formel (3a) oder (3b) kann als Säurebindemittel dienen, wodurch der Zusatz eines gesonderten Säurebindemittels entfallen kann.

Die Umsetzung zu den Verbindungen der genannten Formel (1) kann bei Anwendung eines geeigneten Lösungsmittels in homogener Phase erfolgen. Überraschenderweise verlaufen die Umsetzungen jedoch auch in einem Lösungsmittel, in dem eine oder beide Verbindungen der allgemeinen Formeln (2) bzw. (3a) oder (3b) schwer löslich sind, wie beispielsweise in Wasser, einheitlich und in guten Ausbeuten. Hierzu werden die Verbindungen der genannten Formel (3a) oder (3b) in Wasser gelöst bzw. suspendiert und nach Zugabe einer äquivalenten Menge eines Säurebindemittels werden die Verbindungen der genannten Formel (2) in Suspension oder in fester Form als Granulat zugegeben.

Der Zusatz eines Dispergierhilfsmittels oder eines Phasentransferkatalysators, der fallweise zu einer Reaktionsbeschleunigung führt, ist der Reaktion nicht abträglich. In der Regel braucht ein derartiger Hilfsstoff jedoch nicht zugesetzt werden.

Es ist zweckmäßig, 1 Mol der Verbindung der genannten Formel (2) mit 1 bis 2,5 Mol der Verbindung der Formel (3a) oder (3b) zur Umsetzung zu bringen. Die Anwendung eines größeren Überschusses einer Verbindung der Formel (3a) oder (3b) ist möglich, was zu einer Verkürzung der Reaktionszeit führt, darüberhinaus jedoch keine unmittelbaren Vorteile bringt und aus wirtschaftlichen Gründen nicht zweckmäßig ist.

Der Ablauf der Umsetzung wird mittels Hochleistungs-Flüssigkeits-Chromatographie (HPLC) verfolgt und der Endpunkt der Reaktion durch das vollständige Verschwinden der Verbindung der genannten Formel (2) ermittelt.

Beim erfindungsgemäßen Verfahren kristallisieren die Reaktionsprodukte der genannten Formel (1) teilweise bereits während der Umsetzung aus, häufig auch erst beim Erkalten der Reaktionsmischung. In anderen Fällen können sie durch Abkühlen und/oder durch Aussalzen, beispielsweise mit Kaliumchlorid, Natriumchlorid oder Natriumsulfat zur Kristallisation gebracht und durch Filtration isoliert werden.

Aus wirtschaftlichen und technischen Gründen werden die Umsetzungen vorzugsweise in Wasser bei Temperaturen zwischen 20 °C und 180 °C, vorzugsweise zwischen 40 °C und 100 °C, und Drücken zwischen 0,5 und 100 bar, vorzugsweise jedoch bei Normaldruck durchgeführt.

Da elektronenreiche aromatische Amine, insbesondere Diamine, wie beispielsweise p-Phenylendiamin, bei erhöhter Temperatur recht oxidationsempfindlich sind, empfiehlt sich die Durchführung der Reaktion unter einer Inertgasatmosphäre, beispielsweise unter Stickstoff, wodurch die Bildung harziger Nebenprodukte unterdrückt und gleichzeitig die Produktausbeute erhöht wird.

Aromatische Diaminoverbindungen der genannten Formeln (3a), (3b) die in dem erfindungsgemäßen Verfahren eingesetzt werden können, sind beispielsweise

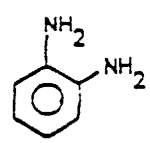 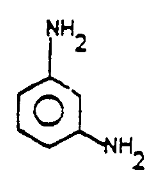 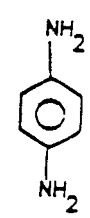 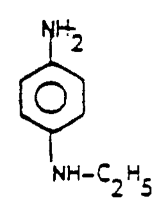

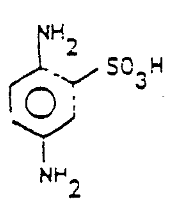 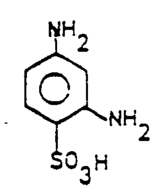 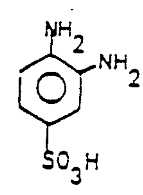 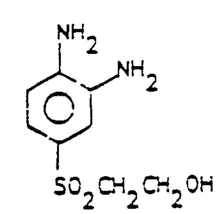

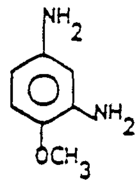
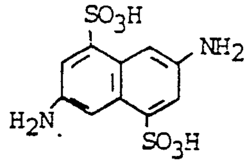
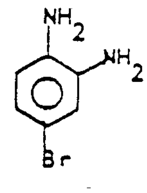
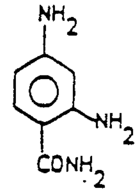

In der DE-PS 1 179 317 (Beispiel 5) wird die Herstellung von β-Hydroxy-[3-nitro-4-(4'-aminophenylamino)-phenyl]-sulfon durch Umsetzung von β-Hydroxyethyl-[(3-nitro-4-chlor)-phenyl]-sulfon mit 4-Aminoacetanilid und anschließende Verseifung beschrieben.

Bisher wurder somit zur Herstellung von Verbindungen der genannten Formel (1) aus Verbindungen der genannten Formeln (2) und (3a) bzw. (3b) im Falle von ambidenten aromatischen Aminen, insbesondere bei Diaminobenzolderivaten, diese in Form ihrer Acylamino-anilinderivate umgesetzt, um die ebenfalls auftretende Zweitsubstitution an der zweiten Aminogruppe zu verhindern. Demgegenüber erlaubt das erfindungsgemäße Verfahren die Umsetzung ungeschützter aromatischer Diaminobenzolderivate, wie beispielsweise 1,4-Diaminobenzol-3-sulfonsäure, mit 4-Halogen-3-nitrophenyloxethylsulfonen ohne störende Zweitsubstitution an der freien Aminogruppe. Dabei ist ein großer Überschuß an Verbindungen der genannten Formeln (3a) bzw. (3b) nicht erforderlich, was besonders in wirtschaftlicher Hinsicht vorteilhaft ist.

Darüber hinaus entfällt beim erfindungsgemäßen Verfahren die Abspaltung der Acylschutzgruppe, was einen unmittelbaren wirtschaftlichen Vorteil mit sich bringt.

In der GB-PS 924 990 (Beispiel 62) wird die Umsetzung von 3-Nitro-4-chlorbenzol-β-hydroxyethylsulfon mit Metanilsäure (Monoamin) beschrieben, wobei das erhaltene Produkt anschließend mit Essigsäureanhydrid in einen Esterfarbstoff überführt wird.

Die nach dem erfindungsgemäßen Verfahren erhältlichen Arylamino-nitro-phenyloxethylsulfone sind wertvolle Vorprodukte zur Herstellung von Azofarbstoffen und Phthalocyaninfarbstoffen. So wird in der DE-PS 1 179 317 die Herstellung von wasserlöslichen Metallphthalocyaninfarbstoffen durch Umsetzung von u. a. Diaminverbindungen der Formel

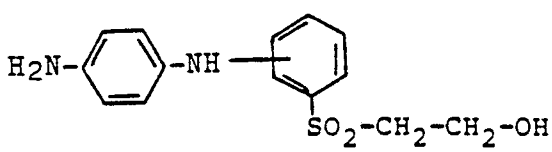

mit Phthalocyaninsulfonsäurechloriden und anschließende Überführung des Kondensationsprodukts in den sauren Schwefelsäureester beschrieben.

Die nachfolgend aufgeführten Beispiele sollen das Verfahren näher erläutern.

## Beispiel 1

4-(4-Aminophenyl)-amino-3-nitro-phenyloxethylsulfon

Zu einer Lösung von 129,5 g 1,4-Phenylendiamin in 1 l Wasser gibt man 24,2 g Magnesiumoxid. Danach gibt man unter Stickstoff-Atmosphäre 265,7 g 4-Chlor-3-nitrophenyloxethylsulfon, suspendiert in 1 l Wasser, bei 40 °C im Verlaufe einer Stunde zu. Man rührt 2 Stunden bei 40 °C und anschließend bis zur Vervollständigung der Reaktion bei 60 °C. Der Endpunkt der Reaktion wird durch HPLC ermittelt.

Beim Abkühlen auf Raumtemperatur kristallisiert das Reaktionsprodukt aus der Reaktionsmischung aus und wird abfiltriert. Man erhält 309,0 g 4-(4-Aminophenyl-)amino-3-nitro-phenyloxethylsulfon mit einem Reingehalt von 98 %, entsprechend einer Ausbeute von 89,8 % der Theorie. Der Schmelzpunkt beträgt 156-158 °C.

| | | | | | | |
|---|---|---|---|---|---|---|
| Analyse : | Ber. | : | C 49,8 | H 4,5 | N 12,4 | S 9,4 |
| $C_{14}H_{15}N_3O_5S$ | Gef. | : | C 49,3 | H 4,3 | N 12,5 | S 9,1 |
| [337,35] | | | | | | |

1H-NMR ($d_6$DMSO) : δ = 9,77 ppm (s, NH), 8,45 (d, 1H), 7,75 (dd, 1H), 7,75 (dd, 1H), 6,95 (m, 3H), 6,62 (d, 2H), 5,19 (s, $NH_2$), 4,82 (t, OH), 3,71 (m, $—CH_2—$), 3,42 (m, $—CH_2—$)

## Beispiel 2

4-(3-Aminophenyl-)amino-3-nitro-phenyloxethylsulfon

In die Lösung von 64,7 g 1,3-Phenylendiamin in 1 l Wasser trägt man 10,1 g Magnesiumoxid ein.

Unter Stickstoff-Atmosphäre gibt man anschließend 132,85 g 4-Chlor-3-nitro-phenyloxethylsulfon als Suspension in 1 l Wasser bei 50 °C in einer Stunde zu. Nach 2 Stunden bei 50 °C erhitzt man auf 65 °C und rührt mehrere Stunden bei dieser Temperatur. Nach üblicher Aufarbeitung erhält man 138,8 g 4-(3-Aminophenyl-)amino-3-nitro-phenyloxethylsulfon mit einem Reingehalt von 96 % (HPLC), entsprechend einer Ausbeute von 78,7 % der Theorie. Der Schmelzpunkt beträgt 132-133 °C.

1H-NMR : ($d_6$-DMSO) : δ = 9,82 ppm (s̄, 1NH), 8,40 (d, 1H), 7,71 (dd, 1H) 6,90 (m, 2H), 6,70 (m, 3H), 5,25 (s̄, $NH_2$), 5,00 (t, OH), 3,75 (m, $-CH_2-$, 4H)
MS : m/z = 337

## Beispiel 3

4-(3-Amino-4-sulfophenyl-)amino-3-nitro-phenyloxethylsulfon

Zu der Suspension von 225,8 g 2,4-Diaminobenzol-sulfonsäure in 500 ml Wasser gibt man bei pH 9,0 eine Suspension von 265,7 g 4-Chlor-3-nitro-phenyloxethylsulfon in 1 l Wasser bei 60-65 °C im Verlaufe von einer Stunde zu. Nach Zugabe eines Dispergierhilfsmittels rührt man 10-12 Stunden bei 65-70 °C, wobei der pH-Wert durch Zugabe von wäßriger Natronlauge bei pH 8,5-9,0 konstant gehalten wird. Nach Abkühlen der Reaktionsmischung auf 10 °C wird das orangerot auskristallisierende Produkt abgesaugt und getrocknet. Man erhält 347,1 g 4-(3-Amino-4-sulfophenyl-)amino-3-nitro-phenyloxethylsulfon als Natriumsalz vom Schmelzpunkt 187-189 °C mit einem Reingehalt von 93 % (HPLC), entsprechend einer Ausbeute von 73,5 % der Theorie.

1H-NMR : ($d_6$-DMSO) : δ = 9,97 ppm (s̄, NH), 8,50 (d, 1H), 7,70 (dd, 1H), 6,97 (d, 1H), 6,90 (m, 3H), 5,33 (s̄, $NH_2$), 4,78 (t, OH), 3,62 (m, $-CH_2-$, 2H), 3,39 (m, $-CH_2-$, 2H)

| | | | | | | |
|---|---|---|---|---|---|---|
| Analyse : | Ber : | C 38,2 | H 3,2 | N 9,5 | S 14,5 | Na 5,2 |
| $C_{14}H_{14}N_3O_8S_2Na$ | Gef : | C 36,2 | H 3,4 | N 8,8 | S 13, | Na 5,5 |
| [439,25] | | | | | | |

## Beispiel 4

4-(4-Amino-3-sulfophenyl)-amino-3-nitro-phenyloxethylsulfon

Eine Lösung von 244,7 g 2,5-Diaminobenzolsulfonsäure (92,2 %ig, entsprechend 225,8 g 100 %ig) in 1,5 l Wasser wird mit 20 %iger wäßriger Sodalösung auf pH 8,8 eingestellt. Danach gibt man bei 40 °C 265,7 g 4-Chlor-3-nitrophenyloxethylsulfon im Verlauf von zwei Stunden in pulverisierter Form zu und hält den pH-Wert mit 20 %iger Sodalösung konstant. Nun erhöht man die Temperatur auf 60 °C und rührt noch zwei Stunden. Man läßt abkühlen und gießt die Reaktionsmischung auf 1 l Eiswasser. Das nach Zugabe von Natriumchlorid auskristallisierende Produkt wird abgesaugt und getrocknet. Man erhält 426,0 g 4-(Amino-3-sulfophenyl-)amino-3-nitro-phenyloxyethylsulfon als Natriumsalz mit einem Schmelzpunkt von 212 °C und einem Reingehalt von 93,5 % (HPLC), entsprechend einer Ausbeute von 90,6 % der Theorie.

| | | | | | | |
|---|---|---|---|---|---|---|
| Analyse : | Ber : | C 38,2 | H 3,2 | N 9,5 | S 14,5 | Na 5,2 |
| $C_{14}H_{14}N_3O_8S_2Na$ | Gef : | C 35,9 | H 3,6 | N 8,9 | S 13,6 | Na 5,8 |
| [439,25] | | | | | | |

## Beispiel 5

4-[2-Amino-4-(2'-hydroxyethylsulfonyl)-phenyl-]amino-3-nitrophenyloxethylsulfon

Zu der Suspension von 240 g 3,4-Diaminophenyloxethylsulfon in 1 l Wasser gibt man bei Raumtemperatur 265,7 g 4-Chlor-3-nitro-phenyloxethylsulfon portionsweise als Granulat zu und hält dabei den pH-Wert der Reaktionsmischung mit 10 %iger Natronlauge bei pH 7,5 konstant. Man rührt anschließend bei 80 °C mehrere Stunden. Die beim Abkühlen der Reaktionsmischung anfallende zäh-ölige Masse wird mit Dimethylformamid aufgenommen und durch Eingießen in Eiswasser zur Kristallisation gebracht. Man erhält 312 g 4-[2-Amino-4-(2'-hydroxyethylsulfonyl-)phenyl-]amino-3-nitro-phenyloxyethylsulfon vom Schmelzpunkt 232 °C mit einem Reingehalt von 99 % ($NO_2$), entsprechend einer Ausbeute von 68,5 % der Theorie.
MS : m/z = 445

## Beispiel 6

a) Eine Lösung von 62 g 1-Amino-3,6-disulfo-8-naphthol in 600 ml Wasser wird bei einer Temperatur

von 5-10 °C portionsweise mit 36 g Cyanurchlorid versetzt; der pH-Wert wird mit Natriumhydrogencarbonat bei 2,0 gehalten. Man rührt bei 5 bis 10 °C 4 Stunden nach.

b) Eine Suspension von 32 g Anilin-2-sulfonsäure in 500 g Eiswasser wird mit 45 g konzentrierter Salzsäure versetzt. Die Diazotierung erfolgt durch Zugabe von 40 Volumenteilen einer wäßrigen 5n-Natriumnitrit-Lösung. Nach 4 Stunden bei 5 °C wird in üblicher Weise überschüssige salpetrige Säure mittels Amidosulfonsäure zerstört.

c) Die gemäß b) hergestellte Diazoniumsalzlösung gibt man langsam unter Rühren in die Lösung der gemäß a) hergestellten Kupplungskomponente, wobei man den pH-Wert zwischen 5,0 und 6,0 hält. Zur vollständigen Kupplung wird noch 6 Stunden bei pH 6,0 nachgerührt.

d) Zu der Lösung der gemäß c) hergestellten Azoverbindung werden unter Rühren 84 g 4-(4-Aminophenyl-)amino-3-nitro-phenyloxethylsulfon (hergestellt gemäß Beispiel 1) als Sulfatester zugegeben; der pH-Wert wird zwischen pH 5,5 und 6,0, die Temperatur bei 25 °C gehalten. Man rührt 8 Stunden nach und salzt den entstandenen Farbstoff mit Natriumchlorid aus oder isoliert die Verbindung durch Eindampfen oder Sprühtrocknen.

Man erhält ein rotes, elektrolythaltiges Pulver, welches das Natriumsalz der Azoverbindung der Formel

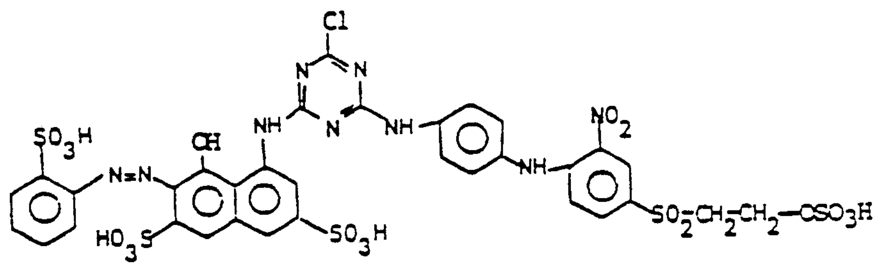

enthält. Diese Verbindung besitzt sehr gute Farbstoffeigenschaften und zeigt in wäßriger Lösung ein Absorptions-maximum bei 510 nm. Mit dieser Verbindung werden insbesondere auf Cellulosefasern gelbstichig-rote Färbungen mit guten Waschechtheiten und Naßlichtechtheiten, insbesondere mit guter Chlorwasserechtheit, erhalten.

Beispiel 7

Man diazotiert in üblicher Weise 56 g Anilin-4-(2'-sulfatoethyl-)sulfon in einem Gemisch aus 500 g Eiswasser und 45 g wäßriger konzentrierter Salzsäure mit 40 Volumenteilen einer wäßrigen 5n Natriumnitritlösung. Diese Diazoniumsalzlösung gibt man bei einem pH-Wert von 5,5-6,0 langsam in die Lösung einer Kupplungskomponente, die wie in Beispiel 7a) beschrieben hergestellt wird. Man rührt danach noch zwei Stunden bis zur vollständigen Kupplung und gibt anschließend 84 g 4-(4-Aminophenyl-)amino-3-nitro-phenyloxethylsulfon (hergestellt gemäß Beispiel 1) als Sulfatester zu, hält den pH-Wert zwischen 5,5 und 6,0 und die Temperatur bei 25 °C konstant und rührt unter diesen Bedingungen etwa 8 Stunden nach. Man erhält nach üblicher Aufarbeitung ein elektrolythaltiges rotes Pulver, das dem Natriumsalz der Verbindung der Formel

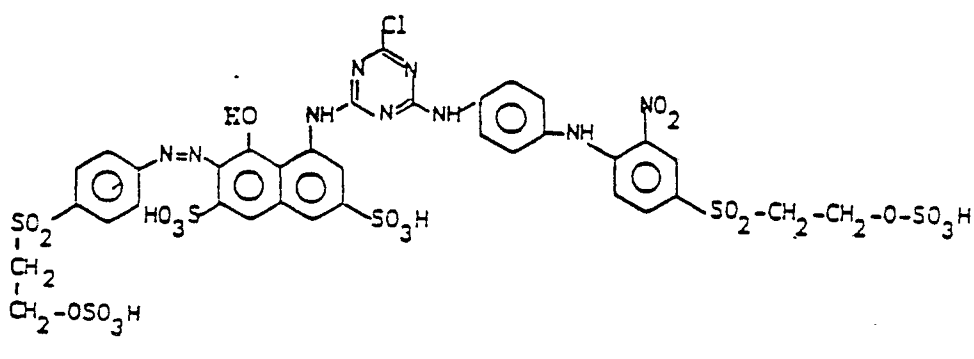

entspricht. Der Farbstoff besitzt in wäßriger Lösung ein Absorptionsmaximum bei 515 nm und ergibt auf Baumwolle farbstarke gelbstichig rote Färbungen mit sehr guten Echtheiten, insbesondere sehr guten Waschechtheiten.

**Patentansprüche**

1. Verfahren zur Herstellung von Arylamino-nitrophenyloxethylsulfonen der allgemeinen Formel (1)

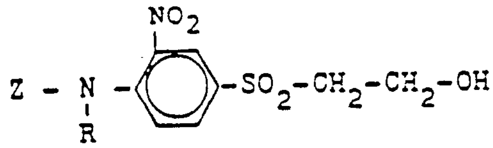

(1)

in welcher Z den Rest

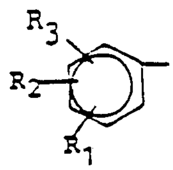

($Z_a$) oder

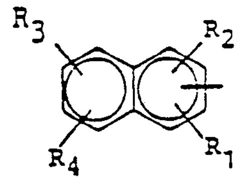

($Z_b$) ($Z_b$)

bedeutet, wobei R ein Wasserstoffatom oder eine Alkyl$_{C1-C4}$ gruppe darstellt, $R_1$ eine —NH—R-Gruppe bedeutet, $R_2$ ein Wasserstoffatom, eine Alkyl$_{C1-C4}$ gruppe oder eine Alkoxy$_{C1-C4}$ gruppe bedeutet, $R_3$ ein Wasserstoff-, Chlor oder Bromatom oder eine Sulfonsäure-, Sulfonsäureamid-, Carbonsäure-, Carbonsäureamid-, Hydroxy-, Carbomethoxy-, Carbethoxy- oder β-Hydroxyethylsulfongruppe darstellt, $R_4$ ein Wasserstoff-, Chlor- oder Bromatom oder eine Sulfonsäure-, Carbonsäure-, Hydroxy- oder Alkoxy$_{C1-C4}$ gruppe oder eine Alkyl$_{C1-C4}$ gruppe bedeutet, wobei im Rest $Z_a$ 1-3 verschiedene, jedoch höchstens zwei gleiche Substituenten von $R_1$-$R_3$, im Rest $Z_b$ 1-4 verschiedene, jedoch höchstens zwei gleiche Substituenten von $R_1$-$R_4$ enthalten sein können, und R die weiter oben genannte Bedeutung hat, dadurch gekennzeichnet, daß man Verbindungen der allgemeinen Formel (2)

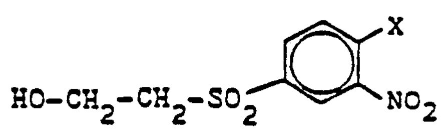

(2)

in welcher X ein Chlor- oder Bromatom bedeutet, mit einer Diaminoverbindung der allgemeinen Formel

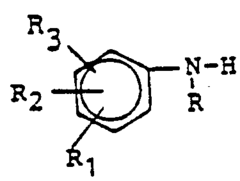

(3a)

oder

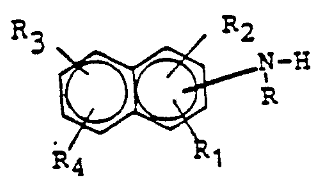

(3b)

in welchen R, $R_1$, $R_2$, $R_3$ und $R_4$ die vorstehend genannten Bedeutungen haben, bei Temperaturen von 20 bis 180 °C, vorzugsweise in Wasser bei pH-Werten von 4,0 bis 10,0 oder in geeigneten organischen Lösungsmitteln oder Gemischen aus solchen Lösungsmitteln in Gegenwart eines anorganischen oder organischen Säurebindemittels umsetzt.

2. Verfahren nach Anspruch 1, dadurch gekennzeichnet, daß man bei Temperaturen von 40-100 °C umsetzt.

3. Verfahren nach mindestens einem der Ansprüche 1 und 2, dadurch gekennzeichnet, daß man in wäßrigem Medium bei pH-Werten von 5,5-8,5 umsetzt.

4. Verfahren nach mindestens einem der Ansprüche 1 bis 3, dadurch gekennzeichnet, daß man in einem niederen Alkanol, Xylol, Chlorbenzol, Dimethylformamid oder N-Methylpyrrolidon umsetzt.

5. Verfahren nach mindestens einem der Ansprüche 1 bis 4, dadurch gekennzeichnet, daß man in Gegenwart von Natriumhydroxid, Kaliumhydroxid, Natriumcarbonat, Natriumhydrogencarbonat, Kaliumcarbonat, Kaliumacetat, Magnesiumoxid, Magnesiumhydroxidcarbonat, einem Trialkyl$_{C1-C4}$ amin, Pyridin, Chinolin, einem Picolin oder von Morpholin oder eines Überschusses einer Diaminoverbindung der genannten allgemeinen Formel 3 (a) oder 3 (b) als säurebindendem Mittel umsetzt.

6. Verfahren nach mindestens einem der Ansprüche 1 bis 5, dadurch gekennzeichnet, daß man in einem Überschuß einer Diaminoverbindung der genannten allgemeinen Formel 3 (a) oder 3 (b) als nicht wäßrigem Reaktionsmedium umsetzt.

## Claims

1. A process for the preparation of arylaminonitrophenyl hydroxyethyl sulfones of the formula (1)

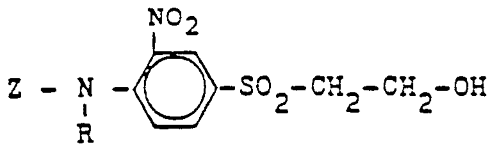

(1)

in which Z denotes the radical

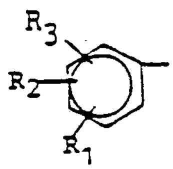

($Z_a$) or

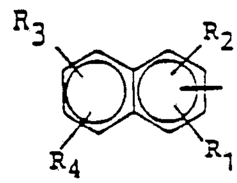

($Z_b$)

in which R represents a hydrogen atom or a $C_1$-$C_4$-alkyl group, $R_1$ denotes an —NR—R group, $R_2$ denotes a hydrogen atom, a $C_1$-$C_4$-alkyl group of a $C_1$-$C_4$-alkoxy group, $R_3$ represents a hydrogen, chlorine or bromine atom or a sulfonic acid, sulfonamide, carboxylic acid, carboxamide, hydroxyl, carbomethoxy, carboethoxy or β-hydroxyethylsulfonyl group, $R_4$ denotes a hydrogen, chlorine or bromine atom or a sulfonic acid, carboxylic acid, hydroxyl or $C_1$-$C_4$-alkoxy or $C_1$-$C_4$-alkyl group, it being possible for 1-3 different $R_1$-$R_3$ substituents, not more than two of which may, however, be identical, to be present in the radical $Z_a$, but for 1-4 different $R_1$-$R_4$ substituents, not more than two of which may, however, be identical, to be present in the radical $Z_b$, and R has the meaning mentioned earlier in the text, which comprises reacting compounds of the formula (2)

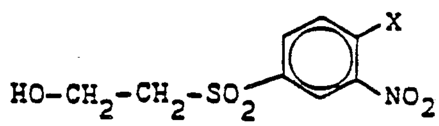

(2)

in which X denotes a chlorine or bromine atom, with a diamino compound of the formula

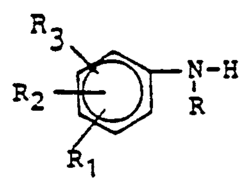

(3a)

or

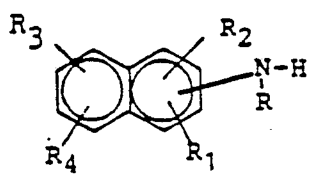

(3b)

in which R, $R_1$, $R_2$, $R_3$ and $R_4$ have the meanings mentioned above, at temperatures from 20 to 180 °C, preferably in water at pH values from 4.0 to 10.0 or in suitable organic solvents or mixtures of such solvents, in the presence of an inorganic or organic acid-binding agent.

2. The process as claimed in claim 1, wherein the reaction is carried out at temperatures from 40 to 100 °C.

3. The process as claimed in at least one of claims 1 and 2, wherein the reaction is carried out in an aqueous medium at pH values from 5.5 to 8.5.

4. The process as claimed in at least one of claims 1 to 3, wherein the reaction is carried out in a lower alkanol, xylene, chlorobenzene, dimethylformamide or N-methylpyrrolidone.

5. The process as claimed in at least one of claims 1 to 4, wherein the reaction is carried out in the presence of sodium hydroxide, potassium hydroxide, sodium carbonate, sodium bicarbonate, potassium carbonate, potassium acetate, magnesium oxide, magnesium hydroxidecarbonate, a tri-$C_1$-$C_4$-al-

kylamine, pyridine, quinoline, a picoline or morpholine or an excess of a diamino compound of the said formula 3 (a) or 3 (b) as the acid-binding agent.

6. The process as claimed in at least one of claims 1 to 5, wherein the reaction is carried out in an excess of a diamino compound of the said formula 3 (a) or 3 (b) as a non-aqueous reaction medium.

**Revendications**

1. Procédé pour préparer des (arylamino)-(nitro)-(hydroxyéthylsulfonyl)-benzènes répondant à la formule générale 1 :

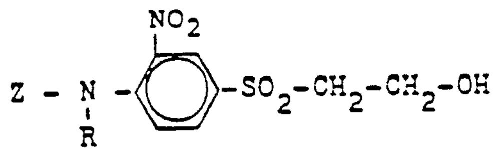

(1)

dans laquelle Z représente un radical :

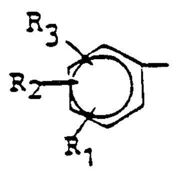

($Z_a$) ou

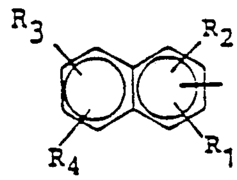

($Z_b$)

R représente un atome d'hydrogène ou un alkyle en $C_1$-$C_4$, $R_1$ représente un radical —NH—R, $R_2$ représente un atome d'hydrogène, un alkyle en $C_1$-$C_4$, ou un alcoxy en $C_1$-$C_4$, $R_3$ représente un atome d'hydrogène, de chlore ou de brome ou un radical sulfo, sulfamoyle, carboxy, carbamoyle, hydroxy, méthoxycarbonyle, éthoxycarbonyle ou hydroxy-2 éthylsulfonyle, $R_4$ représente un atome d'hydrogène, de chlore ou de brome, un sulfo, un carboxy, un hydroxy, un alcoxy en $C_1$-$C_4$ ou un alkyle en $C_1$-$C_4$, le radical $Z_a$ pouvant contenir, pris parmi $R_1$ à $R_3$, de 1 à 3 substituants différents mais au plus 2 substituants identiques, et le radical $Z_b$ pouvant contenir, pris parmi $R_1$ à $R_4$, de 1 à 4 substituants différents mais au plus 2 substituants identiques, et R a la signification qui lui a été donnée ci-dessus, procédé caractérisé en ce qu'on fait réagir des composés répondant à la formule générale 2 :

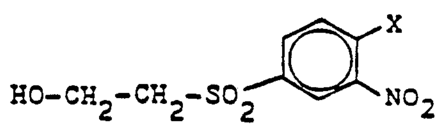

(2)

dans laquelle X représente un atome de chlore ou de brome, avec un composé diaminé répondant à l'une des formules générales :

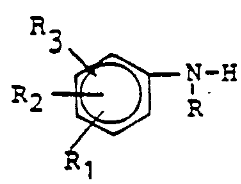

(3a)

ou

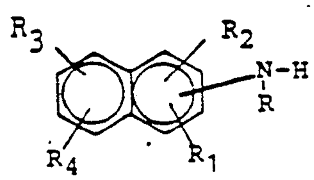

(3b)

dans laquelle R, $R_1$, $R_2$, $R_3$ et $R_4$ ont les significations qui leur ont été données ci-dessus, à des températures de 20 à 180 °C, de préférence dans de l'eau, à des pH de 4,0 à 10,0, ou dans des solvants organiques appropriés ou des mélanges de tels solvants, en présence d'un accepteur d'acides minéral ou organique.

2. Procédé selon la revendication 1 caractérisé en ce qu'on effectue la réaction à des températures de 40 à 100 °C.

3. Procédé selon l'une des revendications 1 et 2, caractérisé en ce qu'on effectue la réaction en milieu aqueux, à des pH de 5,5 à 8,5.

4. Procédé selon l'une quelconque des revendications 1 à 3, caractérisé en ce qu'on effectue la réaction dans un alcanol inférieur, du xylène, du chlorobenzène, du diméthylformamide ou de la N-méthyl-pyrrolidone.

5. Procédé selon l'une quelconque des revendications 1 à 4, caractérisé en ce qu'on effectue la réaction en utilisant, comme accepteur d'acides, l'hydroxyde de sodium, l'hydroxyde de potassium, le carbonate de sodium, l'hydrogénocarbonate de sodium, le carbonate de potassium, l'acétate de potassium, l'oxyde de magnésium, l'hydroxydecarbonate de magnésium, une trialkylamine dont chacun des alkyles contient de 1 à 4 atomes de carbone, la pyridine, la quinoléine, une picoline, la morpholine ou un excès d'un composé diaminé répondant à l'une des formules générales 3a et 3b mentionnées.

6. Procédé selon l'une quelconque des revendications 1 à 5, caractérisé en ce qu'on effectue la réaction en utilisant, comme milieu réactionnel non aqueux, un excès d'un composé diaminé répondant à l'une des formules générales 3a et 3b mentionnées.